# EUROPEAN PATENT APPLICATION

(11) **EP 4 446 813 A1**
(43) Date of publication of application: **16.10.2024**
(21) Application number: 24165449.0
(22) Date of filing: 22.03.2024
(51) Int. Cl.: G03G 13/01, G03G 13/34, G03G 9/08, G03G 15/00

(54) **PLATE DATA FORMING DEVICE, PLATE DATA FORMING PROGRAM, PRESSURE-BONDING DEVICE, AND PLATE DATA FORMING METHOD**

(30) Priority: 10.04.2023 JP 2023063344
(71) Applicant: FUJIFILM Business Innovation Corp., Minato-ku Tokyo (JP)
(72) Inventor: KURITA, Tomokazu, Yokohama-shi, Kanagawa (JP); KUBO, Masahiko, Yokohama-shi, Kanagawa (JP); NAGAI, Takeharu, Yokohama-shi, Kanagawa (JP)
(74) Representative: Kurig, Thomas

(57) **Abstract**

A plate data forming device includes: a processor configured to: form plate data of a pressure-bondable toner that indicate at least one of an amount of the pressure-bondable toner, which is formed on a printing medium, or a region, in which the pressure-bondable toner is formed on the printing medium, on the basis of a pressure-bondable toner formation condition indicating a condition for forming the pressure-bondable toner on the printing medium.

## Description

### BACKGROUND OF THE INVENTION

### (i) Field of the Invention

The present invention relates to a plate data forming device, a plate data forming program, a pressure-bonding device, and a plate data forming method.

### (ii) Description of Related Art

A pressure-bonded printed matter (such as a pressure-bonded postcard), in which pressure-bondable surfaces are pressure-bonded to each other, is known. In the related art, a pressure-bondable toner capable of exhibiting a pressure-bonding function has been proposed. According to the pressure-bondable toner, a pressure-bonded printed matter can be produced without separately using an adhesive such as glue.

For example, JP2021-18422A discloses a printed matter production system that forms a pressure-bondable toner, which is a toner including pressure-responsive particles that exhibit adhesiveness by applying pressure, on a printing medium to pressure-bond pressure-bondable toner surfaces, on which the pressure-bondable toners of the printing medium are formed, to each other through a pressurizing device. JP2008-225042A discloses a method of producing a pressure-sensitive adhesive sheet in which a printing medium on which a pressure-sensitive adhesive toner and a color toner are formed is heated and pressurized such that the pressure-sensitive adhesive toner and the color toner are fixed on the printing medium.

### SUMMARY OF THE INVENTION

Meanwhile, in a case where the pressure-bondable toner is formed on the printing medium, plate data of the pressure-bondable toner is formed like other color toners, and the pressure-bondable toner is formed on the printing medium on the basis of the plate data. The plate data of the pressure-bondable toner is data indicating at least one of an amount of the pressure-bondable toner, which is formed on the printing medium, or a region in which the pressure-bondable toner is formed on the printing medium. Here, for example, the plate data of the pressure-bondable toner may be formed in accordance with various conditions. In other words, for example, in accordance with various conditions, at least one of the amount of the pressure-bondable toner, which is formed on the printing medium, or the region, in which the pressure-bondable toner is formed on the printing medium, may be adaptively controllable.

An object of the present invention is to provide a plate data forming device capable of controlling the amount of the pressure-bondable toner which is formed on the printing medium or the region in which the pressure-bondable toner is formed on the printing medium.

According to a first aspect of the present disclosure, there is provided a plate data forming device including: a processor configured to: form plate data of a pressure-bondable toner that indicate at least one of an amount of the pressure-bondable toner, which is formed on a printing medium, or a region, in which the pressure-bondable toner is formed on the printing medium, on the basis of a pressure-bondable toner formation condition indicating a condition for forming the pressure-bondable toner on the printing medium.

According to a second aspect of the present disclosure, there is provided the plate data forming device according to the first aspect, in which the pressure-bondable toner formation condition may be a binding condition relating to binding of the printing medium on which the pressure-bondable toner is formed.

According to a third aspect of the present disclosure, there is provided the plate data forming device according to the second aspect, in which the binding condition may include characteristics of the printing medium, and the processor may be configured to: form the plate data of the pressure-bondable toner on the basis of the characteristics of the printing medium detected by a sensor.

According to a fourth aspect of the present disclosure, there is provided the plate data forming device according to the first aspect or the second aspect, in which the processor may be configured to: determine the pressure-bondable toner formation condition in response to an instruction issued from a user.

According to a fifth aspect of the present disclosure, there is provided the plate data forming device according to any one of the first to fourth aspects, in which the processor may be configured to: form plate data of a color toner; and not change the plate data of the color toner, in accordance with change of the pressure-bondable toner formation condition.

According to a sixth aspect of the present disclosure, there is provided a pressure-bonding device that pressure-bonds pressure-bondable toner surfaces of the printing medium on which the pressure-bondable toner is formed on the basis of the plate data formed by the plate data forming device according to any one of the first to fourth aspects, in which the pressure-bondable toner surfaces of the printing medium are pressure-bonded to each other at a pressure which is determined on the basis of the pressure-bondable toner formation condition.

According to a seventh aspect of the present disclosure, there is provided a plate data forming program causing a computer to execute a process including: forming plate data of a pressure-bondable toner that indicate at least one of an amount of the pressure-bondable toner, which is formed on a printing medium, or a region, in which the pressure-bondable toner is formed on the printing medium, on the basis of a pressure-bondable toner formation condition indicating a condition for forming the pressure-bondable toner on the printing medium.

According to an eighth aspect of the present disclosure, there is provided a plate data forming method including: forming plate data of a pressure-bondable toner that indicate at least one of an amount of the pressure-bondable toner, which is formed on a printing medium, or a region, in which the pressure-bondable toner is formed on the printing medium, on the basis of a pressure-bondable toner formation condition indicating a condition for forming the pressure-bondable toner on the printing medium.

According to the first aspect, the seventh aspect, or the eighth aspect of the present disclosure, in the plate data forming device, the amount of the pressure-bondable toner, which is formed on the printing medium, or the region, in which the pressure-bondable toner is formed on the printing medium, can be controlled.

According to the second aspect of the present disclosure, the plate data of the pressure-bondable toner can be formed on the basis of the binding condition.

According to the third aspect of the present disclosure, the plate data of the pressure-bondable toner can be formed using the characteristics of the printing medium, which are detected by the sensor, as the pressure-bondable toner formation condition, without depending on a user input.

According to the fourth aspect of the present disclosure, the user is able to determine the pressure-bondable toner formation condition.

According to a fifth aspect of the present disclosure, the amount of the pressure-bondable toner, which is formed on the printing medium, or the region, in which the pressure-bondable toner is formed on the printing medium, can be controlled without affecting the image formed on the printing medium.

According to the sixth aspect of the present disclosure, the pressure-bondable toner surfaces of the printing medium can be pressure-bonded to each other under the pressure-bonding conditions on the basis of the pressure-bondable toner formation condition.

### BRIEF DESCRIPTION OF THE DRAWINGS

Exemplary embodiment(s) of the present invention will be described in detail based on the following figures, wherein:
Fig. 1 is a schematic configuration diagram of a pressure-bonded printed matter forming system according to a present exemplary embodiment;
Fig. 2 is a conceptual diagram showing a pressure-bondable toner;
Fig. 3 is a diagram showing a folded printing medium;
Fig. 4 is a schematic configuration diagram of an image forming apparatus;
Fig. 5 is a view showing a surface on which a pressure-bondable toner is formed in a case of Z-folding; and
Fig. 6 is a schematic configuration diagram of a pressure-bonding device.

### DETAILED DESCRIPTION OF THE INVENTION

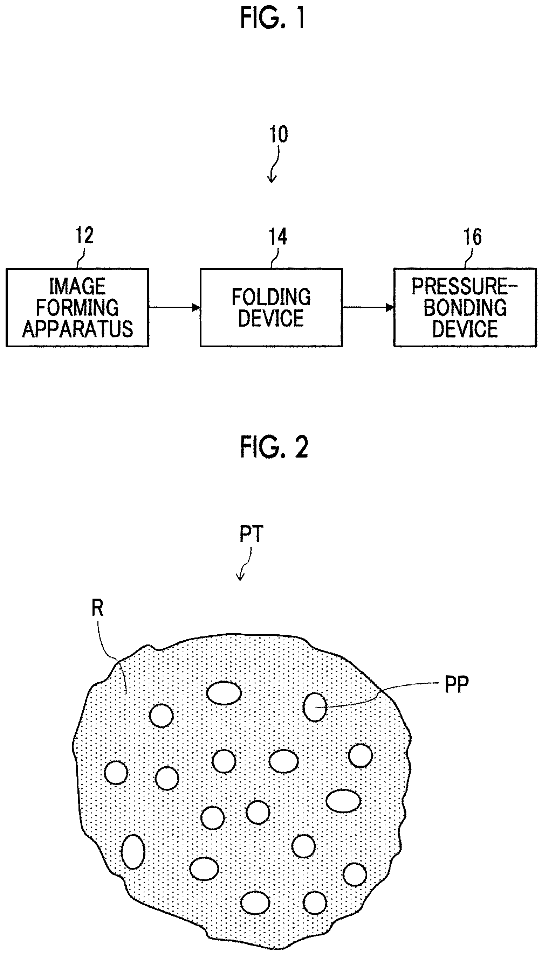

Fig. 1 is a schematic configuration diagram of a pressure-bonded printed matter forming system 10 according to a present exemplary embodiment. The pressure-bonded printed matter forming system 10 is a system for forming a pressure-bonded printed matter (for example, a pressure-bonded postcard) in which pressure-bondable surfaces are pressure-bonded to each other. The pressure-bonded printed matter forming system 10 is configured to include an image forming apparatus 12, a folding device 14, and a pressure-bonding device 16.

The image forming apparatus 12 is an apparatus that executes a printing process of forming an image on a printing medium such as paper. In the present exemplary embodiment, the image forming apparatus 12 is a laser printer. The image forming apparatus 12 sequentially transfers, for example, each color toner of cyan (C), magenta (M), yellow (Y), and black (K) (or to which a special color is added) onto a printing medium, and then heats and pressurizes the color toner transferred onto the printing medium, thereby fixing the color toner onto the printing medium. Thereby, an image is formed on the printing medium.

In the present exemplary embodiment, the image forming apparatus 12 forms a pressure-bondable toner on the printing medium in addition to the color toners. The pressure-bondable toner is a toner which exhibits an adhesive function. Fig. 2 is a conceptual diagram showing a pressure-bondable toner PT. The pressure-bondable toner PT is a resin R corresponding to a toner material in the related art mixed with pressure-responsive particles PP. The pressure-responsive particles PP each are resin having a characteristic of softening in a case where a pressure is applied to the resin. The pressure-responsive particle PP is configured to include a styrene-based resin which includes styrene and other vinyl monomers as polymerization components and a (meth) acrylic acid ester-based resin which includes at least two kinds of (meth) acrylic acid esters as polymerization components and in which a ratio of a mass of the (meth) acrylic acid esters to a total mass of polymerization components is 90% by mass or more. In a case where a pressure is applied, the pressure-responsive particles PP of the pressure-bondable toner PT soften due to the pressure, thereby exhibiting the adhesive function.

In the present exemplary embodiment, the pressure-bondable toner is a transparent-color toner (specifically, the resin R described above is a transparent resin) and is formed on the printing medium so as to cover the color toner. A portion, on which the pressure-bondable toner is formed, functions as a portion that exerts an adhesive function by being applied with a pressure by a pressure-bonding device 16 described later. It should be noted that the pressure-bondable toner does not necessarily have to have a transparent color. For example, the color toner of any one of C, M, Y, K, or a special color may be a pressure-bondable toner. That is, the pressure-bondable toner PT may be a mixture of the resin R, which is a colored resin, and the pressure-responsive particles PP. In such a case, it is not necessary to separately provide the pressure-bondable toner for the color toners such as C, M, Y, and K.

Details of the image forming apparatus 12 will be described later. The printing medium, on which the color toners and the pressure-bondable toners PT are formed, is sent to the folding device 14.

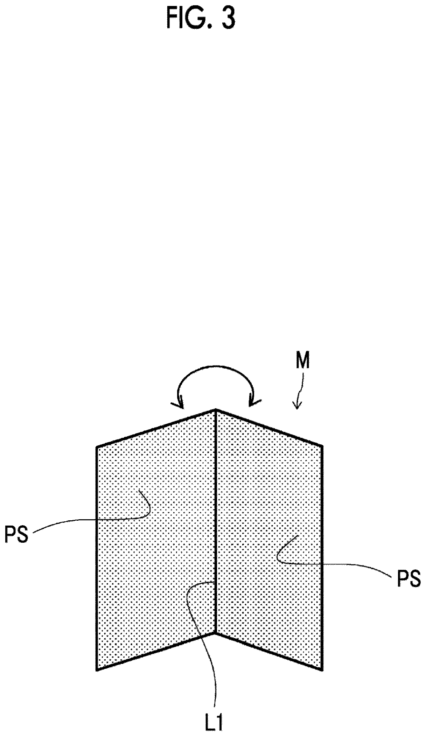

The folding device 14 executes a process of folding the printing medium on which the color toners and the pressure-bondable toners PT are formed by the image forming apparatus 12. Since a specific structure of the folding device 14 may be the same as a specific structure of the folding device in the related art, detailed description thereof will not be repeated here. As a folding method therefor, for example, there are various types such as V-folding, Z-folding, and L-folding. A user may be able to specify the folding method. In the present exemplary embodiment, the folding device 14 folds the printing medium such that the pressure-bondable toner surfaces, which are a surface of the printing medium on which the pressure-bondable toners PT are formed, face each other. For example, in the case of V-folding, as shown in Fig. 3, the pressure-bondable toner surface PS is valley-folded at the fold line L1 so as to be the inner side surface.

A printing medium M, which is folded such that the pressure-bondable toner surfaces PS face each other, is sent to the pressure-bonding device 16.

The pressure-bonding device 16 is an apparatus that pressure-bonds the pressure-bondable toner surfaces PS to each other by applying pressure to the pressure-bondable surface as a surface on which the pressure-bondable toner surfaces PS of the printing medium M face each other. The pressure-bondable toner surfaces PS are pressure-bonded to each other to form a pressure-bonded printed matter. Details of the pressure-bonding device 16 will be described later.

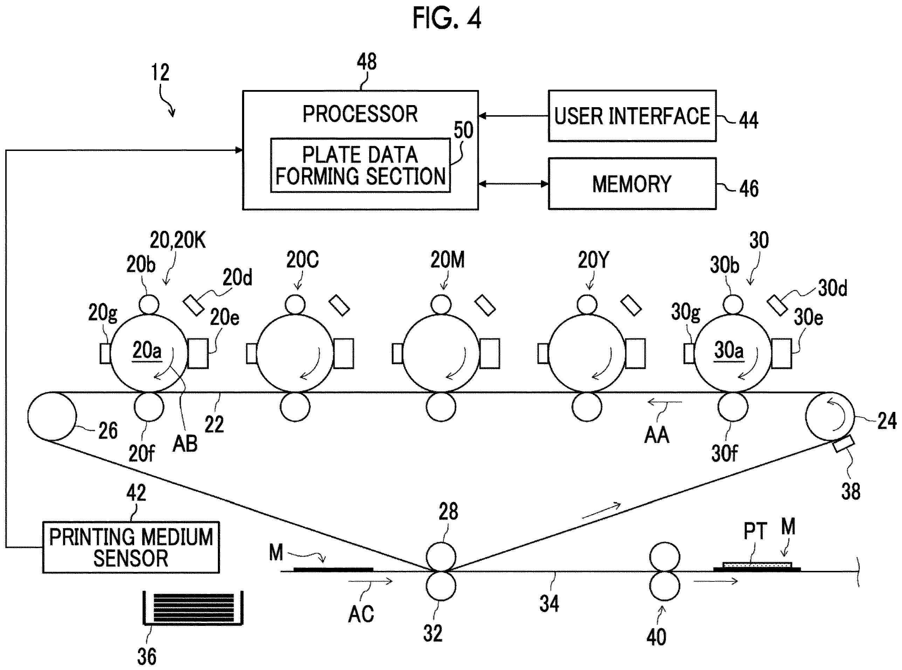

Fig. 4 is a schematic configuration diagram of the image forming apparatus 12. The image forming apparatus 12 includes a plurality of image forming units 20. Each image forming unit 20 is provided to correspond to each color. In the present exemplary embodiment, as shown in Fig. 4, the image forming apparatus 12 includes an image forming unit 20K corresponding to black (K), an image forming unit 20C corresponding to cyan (C), an image forming unit 20M corresponding to magenta (M), and an image forming unit 20Y corresponding to yellow (Y). Further, the image forming unit 20 corresponding to the special color may be provided.

Each image forming unit 20 transfers the color toner of the corresponding color to an intermediate transfer belt 22 on the basis of the plate data of the color toner which is formed by a processor 48 to be described later. The intermediate transfer belt 22 is an endless-track belt, and is provided by being wound around a driving roller 24, a support roller 26, and a counter roller 28. The intermediate transfer belt 22 is moved in a direction, which is indicated by an arrow AA, by a driving force of the driving roller 24.

Each image forming unit 20 is configured to include a photoconductor drum 20a, a charging roller 20b, an exposure device 20d, a toner device 20e, a transfer roller 20f, and a cleaning device 20g. The photoconductor drum 20a is a cylindrical member that rotates in a direction of an arrow AB. A photoconductor is provided on a surface (side surface) of the photoconductor drum 20a. The charging roller 20b is charged with static electricity by supplying electric charge to the surface of the photoconductor drum 20a. The exposure device 20d performs exposure on the surface of the photoconductor drum 20a to a laser to partially weaken the electric charge on the basis of the plate data of the corresponding colors formed by the processor 48, and thereby forms an electrostatic latent image on the surface of the photoconductor drum 20a. The toner device 20e adheres the color toner of the corresponding color to the electrostatic latent image (a portion where the electric charge is weak) of the photoconductor drum 20a. The transfer roller 20f is provided to sandwich the intermediate transfer belt 22 together with the photoconductor drum 20a, and transfers the color toner adhered to the photoconductor drum 20a to the intermediate transfer belt 22. The cleaning device 20g removes the color toner which remains on the photoconductor drum 20a.

In the present exemplary embodiment, the image forming apparatus 12 includes a pressure-bondable toner forming unit 30. The pressure-bondable toner forming unit 30 transfers the pressure-bondable toner PT to the intermediate transfer belt 22 on the basis of plate data (details will be described later) of the pressure-bondable toner PT formed by the processor 48. A structure of the pressure-bondable toner forming unit 30 may be the same as the structure of the image forming unit 20. That is, the pressure-bondable toner forming unit 30 is configured to include a photoconductor drum 30a, a charging roller 30b, an exposure device 30d, a toner device 30e, a transfer roller 30f, and a cleaning device 30g. In particular, in the pressure-bondable toner forming unit 30, the exposure device 30d forms an electrostatic latent image on the surface of the photoconductor drum 20a on the basis of the plate data of the pressure-bondable toners PT formed by the processor 48. The toner device 30e adheres the pressure-bondable toner PT to the electrostatic latent image (the portion where the electric charge is weak) of the photoconductor drum 30a. Then, the transfer roller 30f transfers the pressure-bondable toner PT adhered to the photoconductor drum 30a to the intermediate transfer belt 22. The cleaning device 30g removes the pressure-bondable toner PT remaining on the photoconductor drum 30a.

The image forming units 20 and the pressure-bondable toner forming unit 30 are provided side by side along the stretching direction of the intermediate transfer belt 22. In particular, the pressure-bondable toner forming unit 30 is provided on the upstream side in the movement direction of the intermediate transfer belt 22 with respect to the image forming units 20. The image forming units 20 and the pressure-bondable toner forming unit 30 sequentially transfer the pressure-bondable toners PT and the color toners to the intermediate transfer belt 22. The pressure-bondable toner forming unit 30 is located on the upstream side in the movement direction of the intermediate transfer belt 22 as described above. Therefore, the pressure-bondable toner PT is first transferred onto the intermediate transfer belt 22, and each color toner is transferred onto the pressure-bondable toner PT. In a case where any of the color toners is the pressure-bondable toner PT, the image forming unit 20, which transfers the color toner as the pressure-bondable toner PT to the intermediate transfer belt 22, functions as the pressure-bondable toner forming unit 30.

The secondary transfer roller 32 is provided so as to sandwich a conveying belt 34 together with the counter roller 28. The conveying belt 34 is an endless-track belt, and is moved in the direction indicated by the arrow AC by a driving force of a driving roller (not shown in the drawing). The printing medium M placed on a tray 36 is placed on the conveying belt 34 by a conveying mechanism (not shown in the drawing). In a case where the conveying belt 34 moves in this state, the printing medium M moves toward the nip portion between the counter roller 28 and the secondary transfer roller 32.

The counter roller 28 and the secondary transfer roller 32 sandwich the intermediate transfer belt 22 and the printing medium M onto which the pressure-bondable toners PT and the color toners are transferred. Thereby, the color toners and the pressure-bondable toners PT are transferred onto the printing medium M. As described above, on the intermediate transfer belt 22, the color toners are transferred to the pressure-bondable toners PT. Therefore, on the printing medium M, on the contrary, the pressure-bondable toners PT are transferred onto the color toners.

The cleaning device 38 is provided on the downstream side of the nip portion between the counter roller 28 and the secondary transfer roller 32 in the conveyance direction of the intermediate transfer belt 22. The cleaning device 38 removes the color toners and the pressure-bondable toners PT remaining on the intermediate transfer belt 22.

The fixing device 40 is configured to include, for example, a pair of rollers provided so as to sandwich the conveying belt 34 and the heating device that heats the nip portion of the pair of rollers. The fixing device 40 is provided on the downstream side of the nip portion between the counter roller 28 and the secondary transfer roller 32 in the conveyance direction of the conveying belt 34. The fixing device 40 applies pressure and heat to the printing medium M onto which the color toners and the pressure-bondable toners PT are transferred, thereby fixing the color toners and the pressure-bondable toners PT onto the printing medium M. Thereby, an image using the color toner and the pressure-bondable toner PT are formed on the printing medium M.

It should be noted that as the method of forming the pressure-bondable toners PT on the printing medium M through the image forming apparatus 12, a method other than the method described above may be used as long as the pressure-bondable toners PT are formed on the printing medium M on the basis of the plate data of the pressure-bondable toners PT formed by the processor 48.

A printing medium sensor 42 is a sensor that detects the characteristics of the printing medium M placed on the tray 36 or the printing medium M conveyed by the conveying belt 34. Examples of the characteristics of the printing medium M include a type of the printing medium M (plain paper, coated paper, OHP film, and the like), a thickness of the printing medium, and the like. The printing medium sensor 42 irradiates the printing medium M with light from a light source such as, for example, an LED (Light Emitting Diode), receives the reflected light from the printing medium M through a light receiving unit, and analyzes the light receiving signal, thereby detecting the type of the printing medium M. Alternatively, the printing medium sensor 42 irradiates the printing medium M with light from the light source and receives the light that has passed through the printing medium M by the light receiving unit, thereby detecting the thickness of the printing medium M on the basis of an amount of received light or the like. Alternatively, the printing medium sensor 42 may be an ultrasonic sensor, and may irradiate the front surface of the printing medium M with ultrasonic waves, may receive the ultrasonic waves reflected from the back surface of the printing medium M, and may detect the thickness of the printing medium M on the basis of the time from irradiation to reception of the ultrasonic waves.

A user interface 44 is configured to include, for example, a touch panel, various buttons, and the like. The user interface 44 is used to input a user's instruction to the image forming apparatus 12.

A memory 46 is configured to include a hard disk drive (HDD), a solid state drive (SSD), an embedded multimedia card (eMMC), a read only memory (ROM), a random access memory (RAM), and the like. The memory 46 stores a plate data forming program for operating the processor 48. It should be noted that the plate data forming program can also be stored in a non-transitory computer readable storage medium, such as a universal serial bus (USB) memory or a CD-ROM. The image forming apparatus 12 (specifically, the processor 48) is able to read and execute the plate data forming program from such a storage medium.

The processor 48 is configured to include, for example, a central processing unit (CPU). The processor 48 exerts a function as a plate data forming section 50 by the plate data forming program stored in the memory 46.

The plate data forming section 50 forms the plate data of each color referred to by the exposure device 20d of each image forming unit 20. The plate data of each color is data indicating an amount of color toner of a target color, which is formed on the printing medium M, or a region on the printing medium M on which the color toner of the target color is formed. Specifically, the color plate data is data indicating presence or absence of output of the color at each dot (also referred to as a mesh dot) defined on the surface (that is, the printing surface) of the printing medium M corresponding to the plate data and indicating an amount of toner in a case of the output. The plate data forming section 50 forms the plate data of each color of K, C, M, and Y on the basis of the image relating to the print job input to the image forming apparatus 12. The plate data of each color is transmitted to the image forming unit 20 of each color, and each image forming unit 20 transfers the color toner of each color to the intermediate transfer belt 22 on the basis of the plate data.

Further, the plate data forming section 50 forms plate data of the pressure-bondable toners PT. The plate data of the pressure-bondable toners PT is data indicating at least one of amounts of the pressure-bondable toners PT which are formed on the printing medium M or regions in which the pressure-bondable toners PT are formed on the printing medium M. Specifically, the plate data of the pressure-bondable toners PT is data indicating presence or absence of the output of the pressure-bondable toner PT at each dot defined on the surface (that is, the pressure-bondable toner surface) of the printing medium M corresponding to the plate data and indicating the amounts of the pressure-bondable toners PT in a case of the output. The plate data of the pressure-bondable toners PT is sent to the pressure-bondable toner forming unit 30, and the pressure-bondable toner forming unit 30 transfers the pressure-bondable toners PT to the intermediate transfer belt 22 on the basis of the plate data.

The plate data forming section 50 is able to control the amount of the pressure-bondable toner PT formed on the pressure-bondable toner surface of the printing medium M on the basis of the plate data of the pressure-bondable toners PT. The larger the amount of the pressure-bondable toner PT formed on the pressure-bondable toner surface, the greater the adhesive force of the pressure-bondable toner surface.

For example, the plate data forming section 50 is able to determine the adhesive force of the pressure-bondable toner surface on the basis of an area ratio which is a ratio of dots for outputting the pressure-bondable toners PT to all dots defined on the pressure-bondable toner surface. For example, as compared with the case where the pressure-bondable toner PT is output for all the dots defined on the pressure-bondable toner surface, the pressure-bondable toner PT may be output every other dot defined on the pressure-bondable toner surface. In such a case, the amount of the pressure-bondable toner PT formed on the pressure-bondable toner surface is halved, and the adhesive force of the pressure-bondable toner surface can be reduced. In addition, the plate data forming section 50 is able to control the adhesive force of the pressure-bondable toner surface by variously changing a pattern of the dots for outputting the pressure-bondable toner PT with respect to all the dots defined on the pressure-bondable toner surface.

Alternatively, the plate data forming section 50 is able to determine the adhesive force of the pressure-bondable toner surface on the basis of the roughness of the dots (this is referred to as the number of lines) defined on the pressure-bondable toner surface. For example, in a case where the number of lines of dots defined on the pressure-bondable toner surface is halved, the amount of pressure-bondable toner PT formed on the pressure-bondable toner surface is also halved. As a result, the adhesive force of the pressure-bondable toner surface can be reduced.

Alternatively, the plate data forming section 50 is able to determine the adhesive force of the pressure-bondable toner surface by controlling the amount of the pressure-bondable toner PT which is output to each dot defined on the pressure-bondable toner surface.

Further, the plate data forming section 50 is able to control regions in which the pressure-bondable toners PT are formed on the printing medium M, on the basis of the plate data of the pressure-bondable toners PT. In other words, the plate data forming section 50 is able to determine a surface, on which the pressure-bondable toner PT is formed (that is, a pressure-bondable toner surface), and a surface, on which the pressure-bondable toner PT is not formed, on the basis of the plate data of the pressure-bondable toners PT. For example, in a case where a plurality of surfaces are formed in the printing medium M by folding the printing medium M through the folding device 14, surfaces facing each other (surfaces to be inside) due to the folding may be set as surfaces on which the pressure-bondable toners PT are formed, and a surface of the printing medium M (for example, a front cover or a back cover) that does not face the other surface after folding may be a surface on which the pressure-bondable toners PT are not formed.

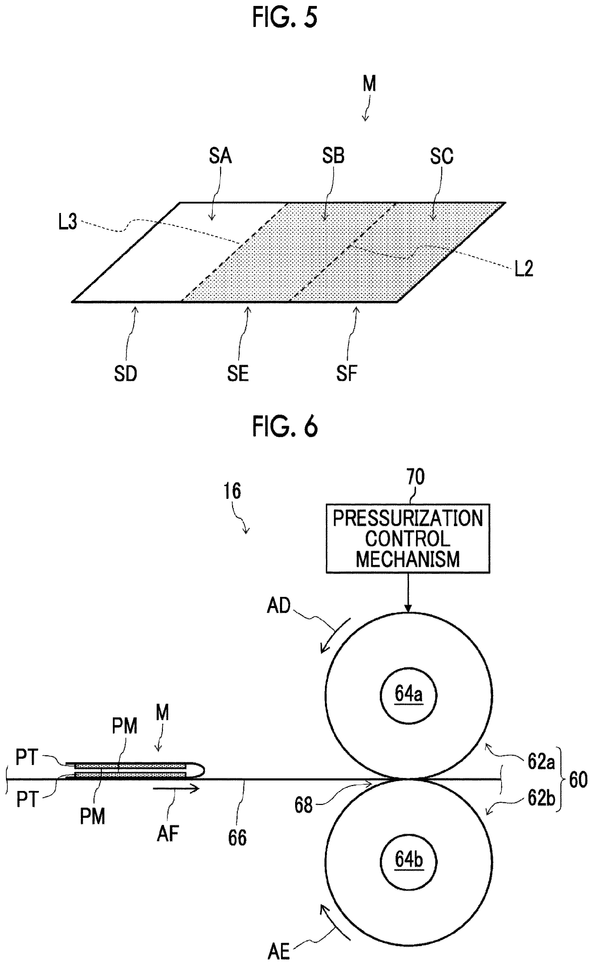

Fig. 5 is a diagram showing a printing medium M before being folded in a Z shape by the folding device 14. The printing medium M shown in Fig. 5 is folded like a valley at the fold line L2 and folded like a mountain at the fold line L3. In a state before the folding, in the printing medium M, the fold lines L2 and L3 define a surface SA, a surface SB, a surface SC, a surface SD (the back surface of the surface SA), a surface SE (the back surface of the surface SB), and a surface SF (the back surface of the surface SC). The printing medium M is folded in a Z shape such that the surface SB and the surface SC face each other, the surface SD and the surface SE face each other, and the surface SA and the surface SF do not face other surfaces. Therefore, in such a case, the plate data forming section 50 forms the plate data of the pressure-bondable toners PT such that the pressure-bondable toners PT are formed on the surface SB, the surface SC, the surface SD, and the surface SE, and the pressure-bondable toners PT are not formed on the surface SA and the surface SF.

In particular, in the present exemplary embodiment, the plate data forming section 50 forms the plate data of the pressure-bondable toners PT on the basis of the pressure-bondable toner formation condition indicating the formation condition of the pressure-bondable toners PT on the printing medium M. As described above, the plate data of the pressure-bondable toners PT is data indicating at least one of the amounts of the pressure-bondable toners PT which are formed on the printing medium M or the regions in which the pressure-bondable toners PT are formed on the printing medium M. Therefore, it may be said that the plate data forming section 50 controls at least one of the amounts of the pressure-bondable toners PT, which are formed on the printing medium M, or regions, in which the pressure-bondable toners PT are formed on the printing medium M, on the basis of the pressure-bondable toner formation condition.

The following information is created in advance and stored in the memory 46: pressure-bondable toner amount information indicating a relationship between the pressure-bondable toner formation condition and the amounts of the pressure-bondable toners PT formed on the printing medium M and pressure-bondable toner formation region information indicating a relationship between the pressure-bondable toner formation condition and regions in which the pressure-bondable toners PT are formed on the printing medium M. The plate data forming section 50 determines the amounts of pressure-bondable toners PT on the printing medium M or the regions on the printing medium M on which the pressure-bondable toners PT are formed, according to the pressure-bondable toner formation condition, on the basis of the pressure-bondable toner amount information or the pressure-bondable toner formation region information stored in the memory 46.

The pressure-bondable toner formation condition includes a binding condition relating to binding of the printing medium M on which the pressure-bondable toners PT are formed.

The binding condition includes a binding force of the printing medium M, in other words, the adhesive force between the pressure-bondable toner surfaces of the printing medium M. Specifically, the plate data forming section 50 forms the plate data of the pressure-bondable toners PT to obtain the following effects. The larger the binding force of the printing medium M indicated by the binding condition, the larger the amount of the pressure-bondable toner PT formed on the pressure-bondable toner surface. The smaller the binding force of the printing medium M indicated by the binding condition, the smaller the amount of the pressure-bondable toner PT formed on the pressure-bondable toner surface.

Further, the binding condition includes a method of folding the printing medium M. Specifically, the plate data forming section 50 is able to determine the regions of the printing medium M on which the pressure-bondable toners PT are formed, on the basis of the method of folding the printing medium M. Specifically, by folding the printing medium M in the folding method, the plate data of the pressure-bondable toners PT is formed such that the pressure-bondable toners PT are formed on facing surfaces (surfaces to be inside) and the pressure-bondable toners PT are not formed on a surface of the printing medium M (for example, a front cover or a back cover) that does not face the other surface after the folding.

Further, the binding condition includes the characteristics of the printing medium M. As described above, the characteristics of the printing medium M include, for example, the type of the printing medium M, the thickness of the printing medium M, and the like, but are not limited thereto. Specifically, the plate data forming section 50 is able to determine the amounts of the pressure-bondable toners PT formed on the pressure-bondable toner surfaces of the printing medium M on the basis of the characteristics of the printing medium M. For example, the plate data forming section 50 forms the plate data of the pressure-bondable toners PT to obtain the following effects. The stronger the solidity of the printing medium M indicated by the type of the printing medium M, the larger the amount of the pressure-bondable toner PT formed on the pressure-bondable toner surface. The weaker the solidity of the printing medium M indicated by the type of the printing medium M, the smaller the amount of the pressure-bondable toner PT formed on the pressure-bondable toner surface. Alternatively, the plate data forming section 50 forms the plate data of the pressure-bondable toners PT to obtain the following effects. The thicker the printing medium M, the larger the amount of the pressure-bondable toner PT formed on the pressure-bondable toner surface. The thinner the printing medium M, the smaller the amount of pressure-bondable toner PT formed on the pressure-bondable toner surface.

It should be noted that the binding force of the printing medium M, the method of folding the printing medium M, and the characteristics of the printing medium M are examples of binding conditions, and the binding conditions may include other conditions.

Further, the pressure-bondable toner formation condition includes a condition relating to an operation mode of the image forming apparatus 12. For example, in a case where the image forming apparatus 12 is operating in an eco-mode in which printing is performed while saving the color toner, the plate data forming section 50 may form the plate data of the pressure-bondable toners PT so as to reduce not only the amount of the color toner but also the amount of the pressure-bondable toner PT as compared with a case of a normal mode.

Further, in a case where there are a plurality of types of pressure-bondable toners PT having adhesive forces different from each other, the pressure-bondable toner formation condition may include the type of the pressure-bondable toner PT. For example, the plate data forming section 50 may form the plate data of the pressure-bondable toners PT to obtain the following effects. The weaker the adhesive force of the pressure-bondable toner PT used, the larger the amount of the pressure-bondable toner PT formed on the pressure-bondable toner surface. The stronger the adhesive force of the pressure-bondable toner PT used, the smaller the amount of the pressure-bondable toner PT formed on the pressure-bondable toner surface.

The plate data forming section 50 determines the pressure-bondable toner formation conditions according to an instruction issued from the user. Specifically, by using the user interface 44, a user inputs information indicating the pressure-bondable toner formation condition (such as information indicating the binding condition of the printing medium M, information specifying the operation mode of the image forming apparatus 12, or Information indicating the type of the pressure-bondable toner PT). Then, the plate data forming section 50 determines the pressure-bondable toner formation condition on the basis of the input information. Alternatively, in a case where the image forming apparatus 12 includes a communication section (not shown in the drawing) that exhibits a function of communicating with another apparatus, the user may input information indicating the pressure-bondable toner formation condition to the user terminal used by the user, and may transmit the information to the image forming apparatus 12, such that the communication section of the image forming apparatus 12 may receive the information. Thereby, the plate data forming section 50 is able to form the plate data of the pressure-bondable toners PT according to the pressure-bondable toner formation condition determined by the user. Thus, the image forming apparatus 12 is able to form the amount of the pressure-bondable toner PT according to the pressure-bondable toner formation condition determined by the user on the printing medium M, or is able to form the pressure-bondable toner PT in the region on the printing medium M according to the pressure-bondable toner formation condition determined by the user.

Further, the plate data forming section 50 is able to determine some pressure-bondable toner formation conditions without depending on the user input. Specifically, the plate data forming section 50 may form the plate data of the pressure-bondable toners PT, by using the characteristics of the printing medium detected by the printing medium sensor 42 as the pressure-bondable toner formation condition.

As described above, in the present exemplary embodiment, the plate data forming section 50 forms the plate data of the pressure-bondable toners PT according to the pressure-bondable toner formation condition. Therefore, the plate data forming section 50 changes the plate data of the pressure-bondable toners PT in accordance with the change of the pressure-bondable toner formation condition. On the other hand, the plate data forming section 50 may not change the plate data of the color toners, for example, in accordance with the change of the pressure-bondable toner formation condition. Thereby, the plate data forming section 50 is able to control the amounts of the pressure-bondable toners PT, which are formed on the printing medium M, or the regions, in which the pressure-bondable toners PT are formed on the printing medium M, without affecting the image formed by the color toners on the printing medium M.

Fig. 6 is a schematic configuration diagram of the pressure-bonding device 16. The pressure-bonding device 16 includes a pair of rollers 60. The pair of rollers 60 is configured to include a cylindrical roller 62a and a roller 62b. Fig. 2 shows bottom surfaces of the roller 62a and the roller 62b. The roller 62a rotates about a roller shaft 64a in the direction indicated by an arrow AD, and the roller 62b rotates about a roller shaft 64b in the direction indicated by an arrow AE in a direction opposite to the roller 62a. The roller 62a and the roller 62b are provided so as to sandwich a conveying belt 66 that conveys the printing medium M. Thereby, the roller 62a and the roller 62b form a nip portion 68 which is a portion in which the roller 62a and the roller 62b face each other with the conveying belt 66 interposed therebetween. The conveying belt 66 is an endless-track belt, and is moved in a direction indicated by an arrow AF by a driving roller (not shown in the drawing). Although details will be described later, the pair of rollers 60 applies a pressure to the pressure-bondable surfaces of the printing medium M by sandwiching the printing medium M in the nip portion 68.

The pressure-bonding device 16 includes a pressurization control mechanism 70. The pressurization control mechanism 70 is a mechanism that controls a pressure applied to the pressure-bondable surfaces of the printing medium M by the pair of rollers 60. The pressurization control mechanism 70 is configured to include, for example, an elastic member (for example, a spring) that exerts an elastic force for pressing the roller 62a against the roller 62b, an actuator for changing the elastic force of the elastic member, a processor that controls the actuator, and the like. In the present exemplary embodiment, the pressure applied by the pair of rollers 60 to the pressure-bondable surfaces of the printing medium M is in a range of about 500 kgf/cm² to 1,000 kgf/cm².

The printing medium M, which is folded such that the pressure-bondable toner surfaces PS face each other, is placed on the upstream side of the nip portion 68 of the conveying belt 66. In a case where the conveying belt 66 moves in this state, the printing medium M moves in the direction of the arrow AC and is eventually sandwiched in the nip portion 68. The pair of rollers 60 applies a pressure to the pressure-bondable surfaces of the printing medium M by sandwiching the printing medium M in the nip portion 68. By applying the pressure from the pair of rollers 60, the pressure-bondable toner surfaces PS are pressure-bonded to each other, and a pressure-bonded printed matter is formed.

The pressure-bonding device 16 may, for example, pressure-bond the pressure-bondable toner surfaces PS of the printing medium M to each other with a pressure determined on the basis of the pressure-bondable toner formation condition described above. As described above, the image forming apparatus 12 determines the amounts of the pressure-bondable toners PT formed on the pressure-bondable toner surfaces PS on the basis of the pressure-bondable toner formation condition. Therefore, in the present exemplary embodiment, the pressure-bonding device 16 (more specifically, the pressurization control mechanism 70) determines the pressure applied to the pressure-bondable surfaces of the printing medium M according to the amounts of the pressure-bondable toners PT formed on the pressure-bondable toner surfaces PS.

Specifically, first, a memory (not shown in the drawing) or the like in the pressurization control mechanism 70 of the pressure-bonding device 16 stores, in advance, pressure information indicating a relationship between the pressure-bondable toner PT formed on the pressure-bondable toner surface PS and the pressure applied to the pressure-bondable surfaces of the printing medium M. The pressure information indicates the following relationships. The smaller the amount of the pressure-bondable toner PT formed on the pressure-bondable toner surface PS, the higher the pressure applied to the pressure-bondable surfaces of the printing medium M. The larger the amount of the pressure-bondable toner PT formed on the pressure-bondable toner surface PS, the lower the pressure applied to the pressure-bondable surfaces of the printing medium M. Then, the processor 48 of the image forming apparatus 12 calculates the amounts of the pressure-bondable toners PT formed on the pressure-bondable toner surfaces PS on the basis of the plate data of the pressure-bondable toners PT formed by the plate data forming section 50, and transmits the information indicating the calculated amounts of the pressure-bondable toners PT to the pressure-bonding device 16. The pressurization control mechanism 70 determines a pressure corresponding to the amount of the pressure-bondable toner PT indicated by the received information, on the basis of the pressure information stored in the memory, and controls the pair of rollers 60 such that the pair of rollers 60 applies the determined pressure to the pressure-bondable surface of the printing medium M.

Although the exemplary embodiment of the present invention has been described above, the present invention is not limited to the exemplary embodiment and can be subjected to various changes without departing from the gist of the present invention.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device). In the embodiments above, the term "processor" is broad enough to encompass one processor or plural processors in collaboration which are located physically apart from each other but may work cooperatively. The order of operations of the processor is not limited to one described in the embodiments above, and may be changed.

### Supplementary Note

(((1))) A plate data forming device comprising:
   a processor configured to:
   form plate data of a pressure-bondable toner that indicate at least one of an amount of the pressure-bondable toner, which is formed on a printing medium, or a region, in which the pressure-bondable toner is formed on the printing medium, on the basis of a pressure-bondable toner formation condition indicating a condition for forming the pressure-bondable toner on the printing medium.
(((2))) The plate data forming device according to (((1))),
   wherein the pressure-bondable toner formation condition is a binding condition relating to binding of the printing medium on which the pressure-bondable toner is formed.
(((3))) The plate data forming device according to (((2))),
   wherein the binding condition includes characteristics of the printing medium, and
   the processor is configured to: form the plate data of the pressure-bondable toner on the basis of the characteristics of the printing medium detected by a sensor.
(((4))) The plate data forming device according to (((1))) or (((2))), wherein the processor is configured to: determine the pressure-bondable toner formation condition in response to an instruction issued from a user.
(((5))) The plate data forming device according to any one of (((1))) to (((4))), wherein the processor is configured to:
   form plate data of a color toner; and
   not change the plate data of the color toner, in accordance with change of the pressure-bondable toner formation condition.
(((6))) A pressure-bonding device that pressure-bonds pressure-bondable toner surfaces of the printing medium on which the pressure-bondable toner is formed on the basis of the plate data formed by the plate data forming device according to any one of (((1))) to (((4))),
   wherein the pressure-bondable toner surfaces of the printing medium are pressure-bonded to each other at a pressure which is determined on the basis of the pressure-bondable toner formation condition.
(((7))) A plate data forming program causing a computer to execute a process comprising:
   forming plate data of a pressure-bondable toner that indicate at least one of an amount of the pressure-bondable toner, which is formed on a printing medium, or a region, in which the pressure-bondable toner is formed on the printing medium, on the basis of a pressure-bondable toner formation condition indicating a condition for forming the pressure-bondable toner on the printing medium.

According to (((1))) or (((7))), in the plate data forming device, the amount of the pressure-bondable toner, which is formed on the printing medium, or the region, in which the pressure-bondable toner is formed on the printing medium, can be controlled.

According to (((2))), the plate data of the pressure-bondable toner can be formed on the basis of the binding condition.

According to (((3))), the plate data of the pressure-bondable toner can be formed using the characteristics of the printing medium, which are detected by the sensor, as the pressure-bondable toner formation condition, without depending on a user input.

According to (((4))), the user is able to determine the pressure-bondable toner formation condition.

According to (((5))), the amount of the pressure-bondable toner, which is formed on the printing medium, or the region, in which the pressure-bondable toner is formed on the printing medium, can be controlled without affecting the image formed on the printing medium.

According to (((6))), the pressure-bondable toner surfaces of the printing medium can be pressure-bonded to each other under the pressure-bonding conditions on the basis of the pressure-bondable toner formation condition.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

10: pressure-bonded printed matter forming system
12: image forming apparatus
14: folding device
16: pressure-bonding device
20: image forming unit
30: pressure-bondable toner forming unit
42: printing medium sensor
44: user interface
46: memory
48: processor
50: plate data forming section
60: pair of rollers
62a, 62b: roller
64a, 64b: roller shaft
66: conveying belt
68: nip portion
70: pressurization control mechanism
PT: pressure-bondable toner
PP: pressure-responsive particles
M: printing medium
PS: pressure-bondable toner surface

## Claims

1. A plate data forming device comprising:
a processor configured to:
form plate data of a pressure-bondable toner that indicate at least one of an amount of the pressure-bondable toner, which is formed on a printing medium, or a region, in which the pressure-bondable toner is formed on the printing medium, on the basis of a pressure-bondable toner formation condition indicating a condition for forming the pressure-bondable toner on the printing medium.

2. The plate data forming device according to claim 1,
wherein the pressure-bondable toner formation condition is a binding condition relating to binding of the printing medium on which the pressure-bondable toner is formed.

3. The plate data forming device according to claim 2,
wherein the binding condition includes characteristics of the printing medium, and
the processor is configured to: form the plate data of the pressure-bondable toner on the basis of the characteristics of the printing medium detected by a sensor.

4. The plate data forming device according to claim 1 or 2, wherein the processor is configured to: determine the pressure-bondable toner formation condition in response to an instruction issued from a user.

5. The plate data forming device according to any one of claims 1 to 4, wherein the processor is configured to:
form plate data of a color toner; and
not change the plate data of the color toner, in accordance with change of the pressure-bondable toner formation condition.

6. A pressure-bonding device that pressure-bonds pressure-bondable toner surfaces of the printing medium on which the pressure-bondable toner is formed on the basis of the plate data formed by the plate data forming device according to any one of claims 1 to 4,
wherein the pressure-bondable toner surfaces of the printing medium are pressure-bonded to each other at a pressure which is determined on the basis of the pressure-bondable toner formation condition.

7. A plate data forming program causing a computer to execute a process comprising:
forming plate data of a pressure-bondable toner that indicate at least one of an amount of the pressure-bondable toner, which is formed on a printing medium, or a region, in which the pressure-bondable toner is formed on the printing medium, on the basis of a pressure-bondable toner formation condition indicating a condition for forming the pressure-bondable toner on the printing medium.

8. A plate data forming method comprising:
forming plate data of a pressure-bondable toner that indicate at least one of an amount of the pressure-bondable toner, which is formed on a printing medium, or a region, in which the pressure-bondable toner is formed on the printing medium, on the basis of a pressure-bondable toner formation condition indicating a condition for forming the pressure-bondable toner on the printing medium.
